# EUROPEAN PATENT SPECIFICATION

(11) **EP 3 925 452 B1**
(45) Date of publication and mention of the grant of the patent: **07.06.2023**
(21) Application number: 21179663.6
(22) Date of filing: 15.06.2021
(51) Int. Cl.: A23K 10/30, A23K 20/142, A23K 50/30

(54) **FEED ADDITIVE TO PROMOTE THE GROWTH OF SOWS AND PIGLETS AND APPLICATION THEREOF**
FUTTERZUSATZ ZUR FÖRDERUNG DES WACHSTUMS VON SÄUEN UND FERKELN UND ANWENDUNG DAVON
ADDITIF ALIMENTAIRE POUR FAVORISER LA CROISSANCE DE TRUIES ET DE PORCELETS ET SON APPLICATION

(30) Priority: 15.06.2020 CN 202010545003
(43) Date of publication of application: 22.12.2021
(73) Proprietor: CHANGSHA LVYE BIOTECHNOLOGY CO. LTD, Changsha City, Hunan (CN); Hunan Normal University, Changsha City, Hunan (CN)
(72) Inventor: HE, LIUQIN, Changsha City (CN); LI, TIEJUN, Changsha City (CN); FENG, YANZHONG, Changsha City (CN); TANG, WENJIE, Changsha City (CN); YIN, YULONG, Changsha City (CN); LI, JIANZHONG, Changsha City (CN); WANG, SHENGPING, Changsha City (CN); HE, XINGGUO, Changsha City (CN)
(74) Representative: Isern Patentes y Marcas S.L.

(56) References cited:
- CN-A- 103 283 977
- CN-A- 104 322 933
- CN-A- 108 371 249
- CN-A- 110 463 840
- XIE JING-TIAN ET AL: "Constituents and Effects of Ginseng Leaf", ORIENTAL PHARMACY AND EXPERIMENTAL MEDICINE, KYUNG HEE ORIENTAL MEDICINE RESEARCH CENTER, KYUNG HEE UNIVERSITY, KR, vol. 4, no. 1, 1 March 2004 (2004-03-01), pages 1-8, XP053006220, ISSN: 1598-2386, DOI: 10.3742/OPEM.2004.4.1.001

## Description

### FIELD OF THE INVENTION

The invention belongs to the technical field of animal nutrition, and specifically relates to feed additive to promote the growth of sows and piglets and applications.

### BACKGROUND OF THE RELATED ART

With the continuous improvement of intensive production of pigs, the immunity of sows has become more and more important. In some countries, the number of sows producing piglets per year is low, the main reason is that their immune function is poor, and they cannot effectively resist the immune stress caused by increased metabolism during pregnancy, delivery and lactation, which further causes the sow's farrowing performance and lactation ability to decline. The reason for the low survival rate of piglets also indicates that piglets have experienced a variety of stress injuries from birth to weaning, the immature immune system is difficult to effectively remove excessive inflammatory factors, resulting in abnormal intestinal function of piglets, affecting the absorption and utilization of nutrients, causing piglets to diarrhea, growth retardation, and even death. The antibodies obtained by pigs from the mother through the placenta or milk (especially colostrum) are called maternal antibodies. Passive immunity through colostrum transmission of maternal antibodies is the main way to improve immunity of newborn piglets, and it is also an important guarantee for the establishment of subsequent active immunity. By improving the immune function of sows during pregnancy and lactation, it can not only improve the reproductive performance of sows, but also enhance the immunity of piglets through maternal transmission and promote the growth of piglets.

Therefore, the breeding of sows and piglets has always been the core key to pig breeding.

CN 103 283 977 A relates to a Chinese herbal medicine compound amino acid feed additive prepared from the following raw materials in parts by weight: 20 to 35 parts of water soluble vitamin, 20 parts of compound amino acid, and 40 to 45 parts of traditional Chinese medicine powder.

CN 110 463 840 A relates to a feed additive for improving production properties of sows prepared from the components in parts by weight: 5-40 parts of DL glycine, 5-40 parts of DL serine, 2-10 parts of bacillus amyloliquefaciens and 10-88 parts of carrier soybean meal.

### SUMMARY OF THE INVENTION

The purpose of the present invention is to provide a feed additive to promote the growth of sows and piglets, which comprises serine, astragalus and ginseng leaves.

The feed additive comprises for a total of 100wt%:: 50-60wt% of the serine, 20-25wt% of the astragalus, 20-25wt% of the ginseng leaves and 0-10wt% of rice bran meal as a carrier when it is present.

Preferably, the feed additive comprises: 50wt% of the serine, 25wt% of the astragalus and 25wt% of the ginseng leaves.

Preferably, the feed additive comprises: 50wt% of the serine, 20wt% of the astragalus, 20wt% of the ginseng leaves and 10wt% of the rice bran meal.

Preferably, the feed additive comprises: 55wt% of the serine, 20wt% of the astragalus, 20wt% of the ginseng leaves, and 5wt% of the rice bran meal.

Preferably, the feed additive comprises: 60wt% of the serine, 20wt% of the astragalus, and 20wt% of the ginseng leaves.

Preferably, the feed additive comprises: 50wt% of the serine, 22wt% of the astragalus, 22wt% of the ginseng leaves, and 6wt% of the rice bran meal.

Preferably, the feed additive comprises: 50wt% of the serine, 23wt% of the astragalus, 23wt% of the ginseng leaves, and 4wt% of the rice bran meal.

The invention also provides a pig diet including a feed additive as defined above.

The invention also provides a process for preparing the pig diet as defined above, wherein the feed additive is incorporated into the pig diet before feeding.

Preferably, the feed additive is incorporated into the diet of gestational sows in an amount such that the serine content in the diet reach 0.69wt% ∼ 1.1wt%.

Preferably, the feed additive is incorporated into the diet of lactating sows in an amount such that the serine content in the diet reach 0.82wt% ∼1.32wt%.

The feed additive of the invention can effectively improve the immune function of sows and piglets and promote the growth of sows and piglets.

### DETAILED DESCRIPTION OF THE PREFERRED EMBODIMENTS

The present invention will be further described below in conjunction with specific embodiments, and the advantages and features of the present invention will become clearer with the description. However, it should be understood that the embodiments are only exemplary and do not limit the scope of the present invention.

In the following description, the methods involved are conventional methods in the art unless otherwise specified. Unless otherwise specified, the raw materials involved are all raw materials that can be obtained from open commercial channels.

Serine is one of the 20 amino acids that make up protein, it is a neutral aliphatic amino acid containing hydroxyl groups, it plays a role in the metabolism of fat, fatty acids and muscle growth, and it also contributes to the production of immune blood cells and antibodies.

Astragalus (scientific name: Astragalus propinquus Schischkin) is a plant of the legume Astragalus genus. Astragalus contains saponins, sucrose, polysaccharides, various amino acids, folic acid, selenium, zinc, copper and other trace elements.

Ginseng leaves are dried leaves of Panax ginseng C.A.Mey., a plant of the Araliaceae family, which contains a variety of saponins and vitamins B1, B2, and C.

The present invention mixes serine, astragalus, and ginseng leaves according to a certain ratio to obtain a novel feed additive, which is suitable for being incorporated into the diet of pigs to help improve the immune function of growing pigs.

### Embodiment 1: feed additive

The formula of the feed additive of this embodiment is as follows: 50wt% of the serine, 25wt% of the astragalus and 25wt% of the ginseng leaves.

Firstly, astragalus and ginseng leaves are ground into powder separately, and then mixed them with serine powder uniformly to make a powder feed additive.

### Embodiment 2: feed additive

The formula of the feed additive of this embodiment is as follows: 50wt% of the serine, 20wt% of the astragalus, 20wt% of the ginseng leaves and 10wt% of the rice bran meal.

Firstly, astragalus and ginseng leaves are ground into powder, and then mixed them with serine and rice bran meal to make a powder feed additive.

### Embodiment 3: feed additive

The formula of the feed additive of this embodiment is as follows: 55wt% of the serine, 20wt% of the astragalus, 20wt% of the ginseng leaves, and 5wt% of the rice bran meal.

Firstly, astragalus and ginseng leaves are ground into powder, and then mixed them with serine and rice bran meal to make a powder feed additive.

### Embodiment 4: feed additive

The formula of the feed additive of this embodiment is as follows: 60wt% of the serine, 20wt% of the astragalus, and 20wt% of the ginseng leaves.

Firstly, astragalus and ginseng leaves are ground into powder, and then mixed them with serine powder uniformly to make a powder feed additive.

### Embodiment 5: feed additive

The formula of the feed additive of this embodiment is as follows: 50wt% of the serine, 22wt% of the astragalus, 22wt% of the ginseng leaves, and 6wt% of the rice bran meal.

Firstly, astragalus and ginseng leaves are ground into powder, and then mixed them with serine powder and rice bran meal to make a powder feed additive.

### Embodiment 6: feed additive

The formula of the feed additive of this embodiment is as follows: 50wt% of the serine, 23wt% of the astragalus, 23wt% of the ginseng leaves, and 4wt% of the rice bran meal.

Firstly, astragalus and ginseng leaves are ground into powder, and then mixed them with serine powder and rice bran meal to make a powder feed additive.

### Embodiment 7: the effect of feed additive on pig growth

Take the feed additive prepared in the embodiment 2 as an example to evaluate the effect of the feed additive of the present invention on the growth of sows and piglets.

A selection of 40 sows with the second parity and a weight of 150±15kg grown on 85 days of gestation were randomly divided into four treatment groups, including the control group and three experimental groups, each with 10 replicates, each replicated 1 sow. The test was divided into two stages. The first stage was from the 85th day of pregnancy to prenatal, a total of about 30 days, and the second stage was from the day of delivery to 7 days after the suckling piglets were weaned, piglets were weaned at 21 days of age, so the second phase of the trial was 28 days in total.

The basal diet was corn-soybean meal type diet, the control group was fed with basal diet, and each experimental group was fed with different test diets, the test diet was based on the basic diet with different proportions of feed additives. In the first stage, the experimental diet of the first experimental group was supplemented with 1.38wt% feed additive on the basis of the basic diet (at this time the content of serine in the diet reached 0.69wt%), the experimental diet of the second experimental group was supplemented with 1.65wt% feed additive on the basis of the basic diet (at this time the content of serine in the diet reached 0.825wt%), the experimental diet of the third experimental group was supplemented with 2.2wt% feed additive on the basis of the basic diet (at this time the content of serine in the diet reached 1.1wt%). In the second stage, the experimental diet of the first experimental group was based on the basic diet with 1.65wt% feed additive (at this time the content of serine in the diet reached 0.825wt%), the experimental diet of the second experimental group was supplemented with 1.98wt% feed additive on the basis of the basic diet (at this time the content of serine in the diet reached 0.995wt%), the experimental diet of the third experimental group was supplemented with 2.64wt% feed additive on the basis of the basic diet (at this time the content of serine in the diet reached 1.32wt%).

The feeding conditions of each group were kept consistent, and the sows were fed with free intake and free water to keep the trough clean and the freshness of the feed.

The health status of the sow and piglet herd was observed and recorded every day. Reproductive performance indicators, such as the birth process on the day of delivery (i.e. the time from the first to the last), the total number of piglets in a farrow, the number of live piglets in a farrow, the number of healthy piglets in a farrow, the number of dead piglets in a farrow, the weight of a farrow at birth, the weight of newborn piglets, etc. were recorded, and the results are shown in Table 1.

The piglets were cross-bred within 24 hours after the sows gave birth, and the number of piglets per farrow was adjusted to 10. The health status of the piglet herd was observed, on the 11th day after delivery, the piglet's farrow weight was weighed and the average piglet weight was calculated, on the 21st day, the number of piglets weaned from the farrow was observed and recorded, the weight of the farrow was recorded, and the average piglet weight was calculated, on the 21st day, the piglets were weaned, within 21 days of lactation, the piglets did not feed the trough but only sucked milk to ensure the unity of maternal nutrient delivery.

**Table 1 growth and reproduction of sows and growth of piglets**

| | Control Group | Experimental Group I | Experimental Group II | Experimental Group III | P Value |
|---|---|---|---|---|---|
| Feed intake during pregnancy(kg/day) | 4.04 ± 0.00^{b} | 4.19 ± 0.02^{a} | 3.95 ± 0.00^{c} | 4.01 ± 0.04^{bc} | 0 |
| Feed intake during lactation(kg/day) | 5.43 ± 0.06^{c} | 6.38 ± 0.05^{a} | 6.12 ± 0.02^{b} | 6.09 ± 0.03^{b} | 0 |
| Birth process(hour) | 3.77 ± 0.22^{b} | 4.17 ± 0.34^{b} | 4.48 ± 0.15^{ab} | 5.12 ± 0.40^{a} | 0.013 |
| The total number of farrowing | 13.63 ± 0.27^{ab} | 12.95 ± 0.24^{b} | 14.00 ± 0.28^{a} | 13.79 ± 0.26^{a} | 0.034 |
| The number of live piglets in a farrow | 13.40 ± 0.16^{a} | 12.47 ± 0.27^{b} | 13.30 ± 0.15^{a} | 13.15 ± 0.25^{ab} | 0.028 |
| The number of healthy piglets | 12.24 ± 0.11^{a} | 11.69 ± 0.12^{b} | 12.36 ± 0.15^{a} | 12.42 ± 0.15^{a} | 0 |
| The weight of a farrow of healthy piglets at birth(kg/farrow) | 17.82 ± 0.30^{b} | 19.41 ± 0.41^{a} | 18.39 ± 0.33^{ab} | 18.46 ± 0.49^{ab} | 0.045 |
| The average weight of healthy piglets at birth (kg/each one) | 1.47 ± 0.02^{b} | 1.69 ± 0.02^{a} | 1.48 ± 0.03^{b} | 1.55 ± 0.05^{b} | 0 |
| The weight of a farrow of 11th day (kg/farrow) | 38.69 ± 0.90^{c} | 48.29 ± 1.00^{a} | 44.40 ± 1.12^{b} | 44.15 ± 1.02^{b} | 0 |
| The average weight of 11th day(kg/each one) | 3.60 ± 0.05^{c} | 4.27 ± 0.08^{a} | 4.05 ± 0.09^{ab} | 3.94 ± 0.08^{b} | 0 |
| The weight of a farrow at weaning(kg/farrow) | 64.74 ± 1.28^{c} | 75.4 ± 1.44^{a} | 69.01 ± 2.03^{bc} | 70.86 ± 1.86^{ab} | 0.001 |
| The number of weaned piglets | 10.00 ± 0.26 | 10.79 ± 0.24 | 10.54 ± 0.33 | 10.77 ± 0.28 | 0.23 |
| The average weight at weaning (kg/each one) | 6.25 ± 0.11^{c} | 7.12 ± 0.09^{a} | 6.65 ± 0.12^{b} | 6.61 ± 0.13^{b} | 0 |

### Remarks:

1. The total number of piglets includes the number of live piglets in a farrow and the number of weak piglets, deformed piglets, stillbirths, and mummies;
2. The number of live piglets in a farrow includes the number of healthy and weak piglets;
3. The number of healthy piglets in a farrow includes the number of piglets weighing more than 0.9kg in good growth condition.

From the results in Table 1, it can be seen that compared with the control group, the daily feed intake of the sows in the three experimental groups and average weight of the weaned healthy piglets in a farrow overlapped all showed an increase, especially the first experimental group showed a significant improvement. In the 11 and 21 days after the piglets were born, compared with the control group, the farrow weight and average body weight of each experimental group with feed additive added to the diet were relatively good, especially the growth performance of piglets in the first experimental group was better.

This shows that the feed additive used in the experiment can effectively promote the growth of sows and piglets. When used to promote the growth of gestational sows, it is preferred to incorporate the feed additive of the present invention into the diet so that the serine content in the diet reaches 0.69wt%, when used to promote the growth of lactating sows, it is preferred to incorporate the feed additive of the present invention into the diet so that the serine content in the diet reaches 0.825wt%.

## Claims

1. A feed additive to promote the growth of sows and piglets, which comprises serine, astragalus and ginseng leaves and comprises for a total of 100wt%: 50-60wt% of the serine, 20-25wt% of the astragalus, 20-25wt% of the ginseng leaves and 0-10wt% of rice bran meal as a carrier when it is present.

2. The feed additive according to claim 1, wherein the feed additive comprises: 50wt% of the serine, 25wt% of the astragalus and 25wt% of the ginseng leaves.

3. The feed additive according to claim 1, wherein the feed additive comprises: 50wt% of the serine, 20wt% of the astragalus, 20wt% of the ginseng leaves and 10wt% of the rice bran meal.

4. The feed additive according to claim 1, wherein the feed additive comprises: 55wt% of the serine, 20wt% of the astragalus, 20wt% of the ginseng leaves, and 5wt% of the rice bran meal.

5. The feed additive according to claim 1, wherein the feed additive comprises: 60wt% of the serine, 20wt% of the astragalus, and 20wt% of the ginseng leaves.

6. The feed additive according to claim 1, wherein the feed additive comprises: 50wt% of the serine, 22wt% of the astragalus, 22wt% of the ginseng leaves, and 6wt% of the rice bran meal.

7. The feed additive according to claim 1, wherein the feed additive comprises: 50wt% of the serine, 23wt% of the astragalus, 23wt% of the ginseng leaves, and 4wt% of the rice bran meal.

8. A pig diet including a feed additive according to any one of claims 1-7.

9. A process for preparing the pig diet according to claim 8, wherein the feed additive according to claims 1-7 is incorporated into the pig diet before feeding.

10. The process according to claim 9, wherein the feed additive is incorporated into the diet of gestational sows in an amount such that the serine content in the diet reach 0.69wt%~1.1wt%.

11. The process according to claim 9, wherein the feed additive is incorporated into the diet of lactating sows in an amount such that the serine content in the diet reach 0.82wt%-1.32wt%.

## Patentansprüche

1. Futterzusatz zur Förderung des Wachstums von Sauen und Ferkeln, der Serin, Astragalus und Ginsengblätter umfasst und auf insgesamt 100 Gew.-%: 50-60 Gew.-% des Serins, 20-25 Gew.-% des Astragalus, 20-25 Gew.-% der Ginsengblätter und 0-10 Gew.-% Reiskleiemehl als Träger, wenn es vorhanden ist, umfasst.

2. Futterzusatz nach Anspruch 1, wobei der Futterzusatz: 50 Gew.-% des Serins, 25 Gew.-% der Astragalus und 25 Gew.-% der Ginsengblätter umfasst.

3. Futterzusatz nach Anspruch 1, wobei der Futterzusatz: 50 Gew.-% des Serins, 20 Gew.-% des Astragalus, 20 Gew.-% der Ginsengblätter und 10 Gew.-% des Reiskleiemehls umfasst.

4. Futterzusatz nach Anspruch 1, wobei der Futterzusatz: 55 Gew.-% des Serins, 20 Gew.-% des Astragalus, 20 Gew.-% der Ginsengblätter und 5 Gew.-% des Reiskleiemehls umfasst.

5. Futterzusatz nach Anspruch 1, wobei der Futterzusatz: 60 Gew.-% des Serins, 20 Gew.-% des Astragalus und 20 Gew.-% der Ginsengblätter umfasst.

6. Futterzusatz nach Anspruch 1, wobei der Futterzusatz: 50 Gew.-% des Serins, 22 Gew.-% des Astragalus, 22 Gew.-% der Ginsengblätter und 6 Gew.-% des Reiskleiemehls umfasst.

7. Futterzusatz nach Anspruch 1, wobei der Futterzusatz: 50 Gew.-% des Serins, 23 Gew.-% des Astragalus, 23 Gew.-% der Ginsengblätter und 4 Gew.-% des Reiskleiemehls umfasst.

8. Schweinefutter, das einen Futterzusatz nach einem der Ansprüche 1-7 enthält.

9. Prozess zur Herstellung des Schweinefutters nach Anspruch 8, wobei der Futterzusatz nach den Ansprüchen 1-7 vor der Fütterung in das Schweinefutter eingefügt wird.

10. Prozess nach Anspruch 9, wobei der Futterzusatz in das Futter von trächtigen Sauen in einer solchen Menge eingefügt wird, dass der Seringehalt in dem Futter 0,69 Gew.-% - 1,1 Gew.-% erreicht.

11. Prozess nach Anspruch 9, wobei der Futterzusatz in das Futter von säugenden Sauen in einer solchen Menge eingefügt wird, dass der Seringehalt in dem Futter 0,82 Gew.-% - 1,32 Gew.-% erreicht.

## Revendications

1. Additif pour l'alimentation animale pour favoriser la croissance de truies et de porcelets, qui comprend de la sérine, de l'astragale et des feuilles de ginseng et qui comprend pour un total de 100 % en poids : 50 à 60 % en poids de la sérine, 20 à 25 % en poids de l'astragale, 20 à 25 % en poids des feuilles de ginseng et 0 à 10 % en poids de farine de son de riz en tant que véhicule lorsqu'il est présent.

2. Additif pour l'alimentation animale selon la revendication 1, dans lequel l'additif pour l'alimentation animale comprend : 50 % en poids de la sérine, 25 % en poids de l'astragale et 25 % en poids des feuilles de ginseng.

3. Additif pour l'alimentation animale selon la revendication 1, dans lequel l'additif pour l'alimentation animale comprend : 50 % en poids de la sérine, 20 % en poids de l'astragale, 20% en poids des feuilles de ginseng et 10 % en poids de la farine de son de riz.

4. Additif pour l'alimentation animale selon la revendication 1, dans lequel l'additif pour l'alimentation animale comprend : 55 % en poids de la sérine, 20 % en poids de l'astragale, 20 % en poids des feuilles de ginseng et 5 % en poids de la farine de son de riz.

5. Additif pour l'alimentation animale selon la revendication 1, dans lequel l'additif pour l'alimentation animale comprend : 60 % en poids de la sérine, 20 % en poids de l'astragale et 20 % en poids des feuilles de ginseng.

6. Additif pour l'alimentation animale selon la revendication 1, dans lequel l'additif pour l'alimentation animale comprend : 50 % en poids de la sérine, 22 % en poids de l'astragale, 22 % en poids des feuilles de ginseng et 6 % en poids de la farine de son de riz.

7. Additif pour l'alimentation animale selon la revendication 1, dans lequel l'additif pour l'alimentation animale comprend : 50 % en poids de la sérine, 23 % en poids de l'astragale, 23 % en poids des feuilles de ginseng et 4 % en poids de la farine de son de riz.

8. Nourriture pour porc incluant un additif pour l'alimentation animale selon l'une quelconque des revendications 1 à 7.

9. Procédé de préparation de la nourriture pour porc selon la revendication 8, dans lequel l'additif pour l'alimentation animale selon les revendications 1 à 7 est incorporé dans la nourriture pour porc avant l'alimentation des animaux.

10. Procédé selon la revendication 9, dans lequel l'additif pour l'alimentation animale est incorporé dans la nourriture de truies gestantes en une quantité telle que la teneur en sérine dans la nourriture atteint 0,69 % en poids à 1,1 % en poids.

11. Procédé selon la revendication 9, dans lequel l'additif pour l'alimentation animale est incorporé dans la nourriture de truies allaitantes en une quantité telle que la teneur en sérine dans la nourriture atteint 0,82 % en poids à 1,32 % en poids.
